# EUROPEAN PATENT APPLICATION

(11) **EP 3 252 770 A1**
(43) Date of publication of application: **06.12.2017**
(21) Application number: 17173488.2
(22) Date of filing: 30.05.2017
(51) Int. Cl.: G10L 25/57, G10L 15/18, G10L 15/26, G10L 17/00

(54) **AUTOMATED IDENTIFICATION AND PROCESSING OF AUDIOVISUAL DATA**

(30) Priority: 01.06.2016 BE 201605404
(71) Applicant: Limecraft NV, 9000 Gent (BE)
(72) Inventor: Verwaest, Maarten, 9000 Gent (BE); Baudoncq, Thibaud, 9800 Deinze (BE); Oorts, Nico, 2640 Mortsel (BE); Van Rijsselbergen, Dieter, 8700 Tielt (BE)
(74) Representative: Plas, Axel Ivo Michel

(57) **Abstract**

The invention provides a method (330) for automated identification and processing of audiovisual data (102), wherein the identification is enhancing the automated processing of audiovisual data (102). More specifically, the present invention relates to a method (330) to identify, and process audiovisual data (102), e.g. audiovisual images or video material for example related to feature films, television or other media productions, such as documentaries, drama, entertainment or sports programs, without the need for human intervention. The method (330) consists of a segmentation and a semantic normalisation of audio from the audiovisual data (102) received, which in turn will be used to generate a dialogue pattern that forms a unique identification of the content of the images, by building a structure representing the dialogues of all the different speakers on the audio.

## Description

### FIELD OF THE INVENTION

The present invention relates to a method for automated identification and processing of audiovisual data, wherein the automated identification is enhancing the processing of audiovisual data. More specifically, the present invention relates to a method to identify, and process audiovisual data, e.g. audiovisual images or video material for example related to feature films, television or other media productions, such as documentaries, drama, entertainment or sports programs, thereby reducing or without the need for human intervention.

### BACKGROUND OF THE INVENTION

The popularisation of digital cameras and software-based video editing technologies is fundamentally changing the requirements of professionals in terms of asset management media production in general. The evolution and accessibility towards low-cost production technologies leads to an explosion of high-quality material, and conventional methods of manual identification and annotation of audiovisual data are not scalable enough to handle the increasing influx of digital content. Identification of audiovisual data is determined as uniquely declaring, nominating or labelling the audiovisual data concerned, whereas annotation of audiovisual data generally implies classifying or tagging, describing or indexing the audiovisual data in order to facilitate editing or post-production of the audiovisual data. For audiovisual data can be exchanged and reused, it is critical to properly identify and annotate the audiovisual content. There is an obvious need for automated identification and annotation of audiovisual data in order to enhance or even enable media productions within a restricted and sometimes narrow time frame. Manual processes still being currently used in the production process of media productions are very time consuming, whereas fast identification of shots of audiovisual data made, becomes more and more important. Therefore, not only regarding television productions, but also with respect to feature film, an accurate method for automated identification is required, further enhancing the processing of the audiovisual data involved.

Current methods of fiction and documentary production are based on a script, wherein the original footage of audiovisual data is shot or else available audiovisual data is retrieved from an archive. In either case, the audiovisual data is or has been produced in relation to the script, and is subsequently post-produced according to the script. Post-production of audiovisual data may comprise video editing, e.g. sound engineering, colour grading, applying visual effects and subtitling. The script is defined as the formal description, i.e. a full text comprising structure and content of one or more versions of the audiovisual data being produced, and as commissioned by the producer, who is defined as the overall responsible person for the media production in particular.

In a professional context, audiovisual data is usually produced in relation to a script or so-called scenario. In case of feature film or television drama, the audiovisual material is shot depicting each scene as described by the scenario. In case of a factual or entertainment media production the script is iteratively made up based upon the available audiovisual content, which can be live action or archive stock. In either case, prior to post-production, the audiovisual content needs to be identified and annotated in relation to the particular editorial item as defined by the script.

Unlike text-based media, audiovisual data is not self-descriptive. In other words, human intervention is required to identify and to classify the produced material. Subsequently the audiovisual data is manually sorted according to the structure defined by the script in a process called off-line editing, provided in bulk to the post-production systems and manually processed. If a producer intends to create different versions of the same audiovisual product for different distribution channels or outlets, a considerable production time and labor cost is incurred by each of the different manual processes. At the end of the lifecycle of the media production, when the production is archived for purposes of preservation or potential reuse in the form of raw material, the content of the audiovisual data of this media production is again manually processed. This further manual process performed by the archivist includes transcription and annotation.

As discussed further below, different attempts have been made so far in the objective to (semi) automate identification of audiovisual data.

There are means developed in order to speed up or to support identification of video material, including a digital clap as described by US patent US6831729. A digital clap, or clapperboard, may be used by a director's assistant, in order to identify the audiovisual material, but moreover to synchronize images with sound. Because the digital clap is put in front of the camera, the image taken becomes self-descriptive. However, human interpretation is required to understand the information on the digital clap and thus to identify the picture material, whereas this human interpretation is always subject to faults and errors. As a consequence, due to error sensitiveness reproducibility is limited when using a digital clap as described above.

Other means may also establish relationships between the items in the script and the audiovisual material associated with it. As an example, US patent US8208792 may be referred to describing a shooting apparatus wherein metadata with reference to scene information is recorded during shooting. The use of a shooting apparatus clearly indicates that individual video fragments recorded with this particular shooting apparatus are considered, and thus not one or multiple integral scenes as a whole of a media production concerned are subject to the link with the script. In addition, the association or comparison with the script is made only on the spot during shooting, and e.g. not retroactively after shooting. Further issue regarding the approach of this patent, is that the cameraman usually doesn't have the time or the information to identify the content and to subsequently insert the proper identifiers. Hence, despite the relation made with the script by this patent, an automated identification process for the audiovisual data is not entirely presented here.

A means of automatic association of audiovisual data with a script or scenario, particularly in relation to media productions, and in a quite developed format, is represented by US patent US8302010. In this patent concerning retroactive synchronisation of audiovisual material, the transcribed scenario is based on speech recognition. However, the method concerned fails to deliver accurate results for editorial purposes due to the limitations of speech recognition algorithms, especially on low-level phoneme basis. Using low-level features such as e.g. phonemes corresponding to a sound-based and tiny-scale representation of the audiovisual data, in combination with the fact that less than 50% of the words from the original script or scenario appear in an audiovisual data production, make this method rather inefficient. A significant part of the audiovisual data is not retraceable in the script, and hence this method represents a rather low success rate for automated identification.

In terms of automated processing of audiovisual data, several methods have been developed to automatically cut audiovisual data into shots but they all lack information on the editorial purpose of each clip. Manual intervention remains to be required, in order to describe or to log the audiovisual material. While several other methods have been established and implemented to extract low-level features of the audiovisual data (e.g. optical character recognition, logo detection, facial and/or object recognition, speech recognition etc...), film and television production and archive professionals still rely on human interpretation as a means of identification, selection and classification of the content of the audiovisual data for further processing, due to the semantic gap between the images and the content depicted by them.

In general, none of the existing shooting, logging or processing methods uses the structure or content description contained by the script as a more high-level representation for the content of the audiovisual data. There is a need for a system to automatically and accurately identify, which sequences of audiovisual material correspond with the editorial parts as defined by the script, and to subsequently process the audiovisual material accordingly.

In summary, existing methods for (semi) automated identification of audiovisual data fail to provide an accurate and efficient means to automatically associate audiovisual data with a formal description, such as a script or scenario, in order to enhance automated processing of audiovisual data.

Accordingly, the aim of the invention is to provide a method and a platform that resolves the shortcomings of the solutions as described above. In order to reduce and avoid human faults and errors, manual processes need to be eliminated. Error sensitiveness thereby decreased or even excluded, may lead to reproducibility of the automated actions. Secondly, the use of specific hardware such as a shooting apparatus in particular, while diminishing flexibility and accessibility with respect to audiovisual data, needs to be avoided from the automated identification process. Considering tools and equipment used merely in general, will allow more options and possibilities for automated identification, as compared to referring to an apparatus with certain specifications and limitations involved. Finally, the success rate of automatically identifying audiovisual data needs to be increased, and therefore the process for automated identification may not rely on the recognition of specific words, short text, sounds or phonemes. Another level for interpretation of the audiovisual data and association of this audiovisual data with a formal description is required.

The objective of the invention is to provide a method for automated and unsupervised identification of audiovisual data, and for using this identification to enhance processing of audiovisual data.

### SUMMARY OF THE INVENTION

The solution provided by the invention, consists in a method for automated identification and processing of audiovisual data, and its advantages are explained in the following paragraphs.

According to a first aspect of the invention, a method is disclosed for automated identification and processing of audiovisual data, wherein the method comprises the steps of:
- receiving audiovisual data from a source;
- extracting an audio part of the audiovisual data;
- generating from the audio part of the audiovisual data a dialogue pattern, wherein the dialogue pattern is determined by recognition of an alternate speaker within the audio part and the duration that the alternate speaker is speaking within the audio part without interruption by another alternate speaker;
- using the dialogue pattern as a unique identification of the audiovisual data; and
- processing of the audiovisual data based upon the unique identification.

The present invention provides a method for automated identification and processing of audiovisual data. The method comprises several steps, initiated with capturing the audiovisual data from a particular source. This source may be e.g. a camera or other recording means, or a computer on which the audiovisual data has been stored for e.g. archiving reasons. Following, the method consists of a segmentation of audio from the audiovisual data received, which in turn will be used to generate a dialogue pattern that forms a unique identification of the content of the images, by building a structure representing the dialogues of all the different speakers on the audio. Different speaker sections are determined and extracted. The dialogue pattern corresponding to the composition of the different speaker sections is based on the sequence of speakers in combination with the length of each individual speaker fragment. In case of a film, the speaker may be e.g. an actor, whereas in case of a television program, the speaker may be a journalist, or someone being interviewed by a journalist. In case of a documentary, the speaker is e.g. the narrator of the documentary. The identification of the audiovisual data takes place using the dialogue pattern that has been generated.

Moreover, generating the dialogue pattern may further be determined by
- generating from the audio part of the audiovisual data a sequence of dialogue fragments, recognizing alternate speakers within the audio part;
- using machine transcription to turn the dialogue fragments in each audio part into text;
- using natural language processing to reduce the text of each audio part to its key semantic concepts; and
- assembling the key semantic concepts defining the dialogue pattern, i.e. wherein the dialogue pattern is the composition of the key semantic concepts of each fragment, and wherein the dialogue pattern still serves as a unique identification of the audiovisual data.

Hence, the present invention also provides a method for automated identification and processing of audiovisual data, wherein the method consists of a segmentation and a semantic normalisation of audio from the audiovisual data or media received, in order to generate dialogue fragments, transform these into text with machine transcription techniques known from the art, extract the key semantics from this text by means of natural language processing - a computational linguistic technique in the field of computer science also known from the art, and subsequently assemble a dialogue pattern based on the extracted key semantics originating from the dialogue fragments. The key semantic concepts are referred to as minimalistic though sufficient to be correctly interpreted extraction of text. The dialogue pattern used forms a unique identification of the content of the images, by building a structure representing the dialogues of all the different speakers on the audio. Different speaker sections are determined and extracted. The dialogue pattern corresponding to the composition of the different speaker sections is originating from the sequence of dialogue fragments, hence based on the sequence of (alternate) speakers in combination with the length of each individual speaker fragment, i.e. the duration that an alternate speaker is speaking without interruption by another alternate speaker. In case of a film, the speaker may be e.g. an actor, whereas in case of a television program, the speaker may be a journalist, or someone being interviewed by a journalist. In case of a documentary, the speaker is e.g. the narrator of the documentary. The identification of the audiovisual data takes place using the dialogue pattern that has been generated.

Having identified the audiovisual data based on the dialogue pattern, further processing of the audiovisual data may occur. By further processing of the audiovisual data is meant but not excluded to e.g. post-producing, redistributing or archiving the audiovisual data, or reusing the audiovisual data in another format or composition.

The technical advantages of the method as described above are manifold. First, due to the fully automated identification and thereby enhanced processing, there is no longer a manual intervention required, and thus the method used is less error sensitive, and therefore enables reproducibility. By using a dialogue pattern generated from the audiovisual data, instead of focusing on words, sounds or phonemes, for the identification of the audiovisual data, the success rate for identifying this audiovisual data significantly increases. The higher-level representation of the dialogue pattern, as compared to using low-level features such as words, sounds or phonemes, results in a more accurate identification of the audiovisual data. Moreover, due to the dependency on the dialogue pattern instead of words, sounds or phonemes, the alternate speaker i.e. the actor, journalist, other speaker or speaking player occurring in the audiovisual data, has more freedom for improvisation, being standard practice in any kind of media production. Finally, besides the reference to a source from where the audiovisual data is retrieved, there is no mentioning of specific hardware or apparatus involved during the identification process, and therefore no limitations due to the specifications or use of this particular hardware or apparatus are impeding the identification process. Hence, while being low-cost in terms of computational overhead, the method for identification as described is robust to modifications of the audiovisual aspect as well as different points of view generated by different cameras.

Moreover, the method for automated identification and processing of audiovisual data as described above, may further comprise the steps of:
- receiving a formal description corresponding to the audiovisual data; and
- mapping the formal description with the audiovisual data using the dialogue pattern.

According to an optional aspect of the invention, the method according to the present invention may further be used to compare and map the audiovisual data with a formal description, being e.g. a script or scenario in case of a film or television production, wherein the mapping is based again on usage of the dialogue pattern as generated by and identifying the audiovisual data.

The beneficial use of the dialogue pattern enhances mapping with the formal description, such as a script, as only less than 50% of the words of the original script survive during a media production. For this reason, patterns of dialogues, i.e. multiple phrases and parts of scenes produced by audiovisual data's alternate speaker e.g. an actor, a narrator or an interviewer, are better compared with a formal description, such as the original script, instead of linking words, sounds or phonemes occurring in the audiovisual data.

Further, regarding the method for automated identification and processing of audiovisual data according to the present invention, the mapping as mentioned above may comprise the steps of:
- decomposing the formal description into logical parts; and
- decomposing the audiovisual data into a sequence of fragments; and
- associating the logical parts of the formal description with the sequence of fragments of the audiovisual data using the dialogue pattern.

The mapping of the formal description with the audiovisual data using the dialogue pattern, as part of the method according to further optional aspect of the present invention while referring to what is written above, may comprise respectively decomposing of the formal description into logical parts, and of the audiovisual data into a sequence of fragments, followed by associating the logical parts of the formal description on one hand, with the sequence of fragments of the audiovisual data on the other hand. The formal description being again e.g. a script or scenario, whereas the logical parts into which the formal description is split, are e.g. individual dialogue parts, i.e. multiple phrases, or part of a scene corresponding to a particular speaker. The script or scenario contains a representation of the individual dialogue parts, as prescribed by the dialogue editor in case of drama production or as retroactively transcribed by the journalist or archivist in case of factual production. Moreover, a sequence of fragments towards which the audiovisual data is decomposed, is also interpretable as a set of dialogue parts, i.e. multiple phrases, or part of a scene corresponding to a particular speaker. Hence, associating the logical parts of the formal description with the sequence of fragments of the audiovisual data equates to associating the individual dialogue parts that are recognizable in both split formats. The sequence of fragments resulting from the decomposition of the audiovisual data may be similar or equal to the sequence of dialogue fragments generated particularly from the audio part of the audiovisual data for determining the dialogue pattern to its semantic essence based on machine transcription followed by natural language processing.

The method according to the present invention as described above, is particularly and preferably directed towards producers of feature film and television drama, wherein original footage is shot to depict the contents described by a scenario. As the dialogue parts can be deducted from the script, the audiovisual data identified by its dialogue pattern can be automatically associated with a particular position in the script.

Decomposing the formal description as well as the audiovisual data into smaller parts, towards individual dialogue part level enhances the automated association of these dialogue parts, and hence facilitates mapping of formal description and corresponding audiovisual data.

With respect to the method for automated identification and processing of audiovisual data according to the present invention, the processing may comprise indexing of the audiovisual data.

In another variation, the method according to the present invention may be directed towards producers of factual or documentary content. In those cases, the script that describes the content of the final media production is retroactively constructed based on the available live action or archive material, and therefore indexing of identified audiovisual data may enhance this retroactive process. In other words, with indexing of the audiovisual data, the corresponding script can be easily retroactively constructed.

Since identified audiovisual data is used for this processing called indexing, the technical benefit of the above is justified.

For the method for automated identification and processing of audiovisual data according to the present invention, the processing may also comprise the steps of:
- gathering a multiple amount of identified audiovisual data that are identified similar to said audiovisual data; and
- selecting and sorting amongst said multiple amount of identified audiovisual data.

The method according to the present invention may further implement processing, by following the steps of first collecting a multiple amount, i.e. at least more than one of audiovisual data each identified based on a dialogue pattern generated from the respective audiovisual data, and subsequently selecting and sorting amongst this multiple amount of identified audiovisual data.

As audiovisual data that has already been identified is used for the selecting and sorting process, the automation of this process is evidently enhanced.

In addition, for the method for automated identification and processing of audiovisual data according to the present invention, the processing may comprise post-producing the audiovisual data, which in turn may comprise audio and/or video editing of the audiovisual data.

In terms of processing, as already referred to above, the method according to the present invention may also apply for post-production of the audiovisual data, comprising typically audio and/or video editing. For example sound engineering, colour grading, white balancing, applying visual effects and subtitling may be understood as part of the video editing process.

With respect to technical added value, the productivity of the video editing process is considerably improved because of the identified audiovisual data used, in addition to the formal description such as a script or scenario, to be easily associated with, due to the dialogue pattern being generated from the audiovisual data.

Furthermore, regarding the method for automated identification and processing of audiovisual data according to the present invention, the processing may comprise redistributing the audiovisual data. In other words, the processing step in the method according to the present invention may further comprise redistribution of the audiovisual data.

In a further variation, the method according to the present invention can be used to compare different files of audiovisual data in order to decide whether they represent the same content. So-called similarity detection is used by producers with the desire to automatically reproduce different versions of the final media production geared towards different distribution channels. In particular, while an editor may take creative decisions using high-resolution audiovisual data, this audiovisual data may be compressed prior to rendering whereby the system can make sure to use the exact image parts or fragments. Otherwise, in case of limited bandwidth availability during video editing as part of post-production, the editor may take creative decisions using compressed audiovisual data. The final media production may then be generated while rendering the high-resolution audiovisual data.

While using identified audiovisual data, similarity detection is performed very easily, and hence automatic reproduction of different versions of the final media production for redistribution towards different multiple channels is enhanced, determining the technical benefit of the above.
With respect to the method for automated identification and processing of audiovisual data according to the present invention, the processing may also comprise archiving of the audiovisual data.

Moreover regarding processing of audiovisual data, the method according to the present invention may be applicable for archiving of audiovisual data.

In another variation, the method according to the present invention is applied whenever the archiving or inventory taking process takes place. Due to the established relationship in a media production environment of the formal description, such as a script or scenario, with the audiovisual data, based upon the dialogue pattern, the audiovisual data can be accurately indexed. By indexing the content of the script after post-production, comparable with the process of retroactively constructing the script, the possibility of retrieval of any script data in particular, is considerably improved as compared to a manual transcription process.

Due to the fact that identified audiovisual data is used, the process of archiving is improved, whereas retrieval of particular audiovisual data after having been archived, is enhanced due to indexing of identified audiovisual data as mentioned above.

Regarding the method for automated identification and processing of audiovisual data according to the present invention, the processing may comprise reusing the audiovisual data as raw material for generating different audiovisual data.

Finally, processing as referred to in the method according to the present invention, may comprise reuse of the audiovisual data as raw material or basis for making other audiovisual data, representing another format or composition of the raw material. Reuse can thus be interpreted as repurpose of the audiovisual data, using the raw material of this audiovisual data and consequently building a new media production program based upon this raw material of the audiovisual data, generally with the intention to bring another message, including a different purpose, than the original audiovisual data represented.

As considered to technical advantage, again this can be related to fact that identified audiovisual data is used, thereby facilitating reuse or repurpose of this audiovisual data.

At last, the method for automated identification and processing of audiovisual data according to the present invention, may determine that the recognition of an alternate speaker is based upon voice recognition, and/or frequency analysis.

Using the method according to the present invention, the recognition of an alternate speaker, such as another actor, narrator, journalist or interviewer, may take place based upon known techniques of voice recognition and/or related to frequency analysis.

Using well-known and qualified voice recognition and/or frequency analysis techniques for speaker recognition, will clearly lead to the technical improvement of the speaker recognition process.

According to a second aspect of the invention, a data processing system is disclosed comprising means for carrying out the method for automated identification and processing of audiovisual data according to first aspect of the invention.

Moreover, a data processing system for applying the method for automated identification and processing of audiovisual data as mentioned above is also provided.

According to a third aspect of the invention, a computer program is disclosed comprising software code adapted to perform the method for automated identification and processing of audiovisual data according to first aspect of the invention.

In addition to a method and a system, the invention also relates to a computer program representing the corresponding software code in order to perform the method for automated identification and processing of audiovisual data as mentioned above.

According to a fourth aspect of the invention, a computer readable storage medium comprising the computer program according to third aspect of the invention, i.e. comprising software code adapted to perform the method for automated identification and processing of audiovisual data according to first aspect of the invention.

As a final aspect, a computer readable storage medium comprising the computer program with the software code is also part of the invention.

### BRIEF DESCRIPTION OF THE DRAWINGS

Fig.1 is a functional block scheme representing an embodiment of the data processing system for carrying out the method for automated identification and processing of audiovisual data according to the present invention.
Fig.2 illustrates a script and corresponding block diagram after script processing of this script, as processed in an embodiment of the data processing system for carrying out the method for automated identification and processing of audiovisual data according to the present invention.
Fig.3 is a flow chart representing an embodiment of the method for automated identification and processing of audiovisual data according to the present invention.
Fig.4 shows schematically a user interface layout for a search and selection application of an embodiment of the data processing system for carrying out the method for automated identification and processing of audiovisual data according to the present invention.
Fig.5 shows schematically a user interface layout for a video editing application of an embodiment of the data processing system for carrying out the method for automated identification and processing of audiovisual data according to the present invention.
Fig.6 shows schematically a user interface layout for an archiving application of an embodiment of the data processing system for carrying out the method for automated identification and processing of audiovisual data according to the present invention.

### DETAILED DESCRIPTION OF EMBODIMENTS

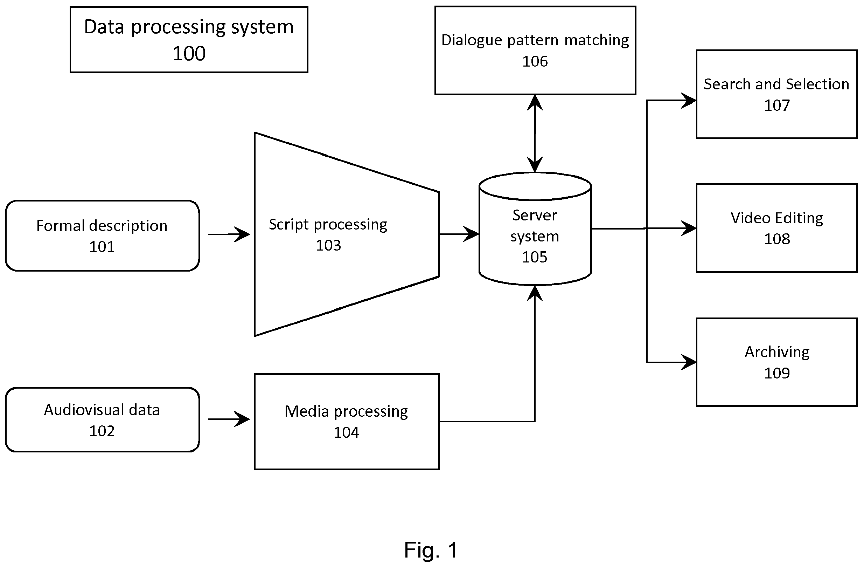

An embodiment of a data processing system 100, for carrying out the method for automated identification and processing of audiovisual data, is illustrated by Figure 1. The data processing system 100 has an architecture consisting of different software modules 103, 104, 106, 107, 108, 109 and a server system 105. The incoming data 101, 102 for the data processing system 100, respectively a formal description 101 and corresponding audiovisual data 102 are automatically distinguished and subsequently received by the respective software module script processing 103 or media processing 104 for processing the respective data 101, 102.

Further referring to Figure 1, either by the software module media processing 104 or script processing 103 the incoming data 101, 102, being audiovisual data 102 or formal descriptions 101 respectively, are both analysed and interpreted. In general, through script processing 103 a formal description 101 is decomposed into logical parts, being categorized. In case the formal description 101 is a script, logical parts are typically actions and dialogues related to a specific character including other instructions such as sound effects, for a particular scene. Categorizing these logical parts as e.g. actions and dialogues related to characters, or instructions, enables us to structure the layout of the script. In comparison, via the software module media processing 104, audiovisual data 102 is decomposed into a sequence of fragments, e.g. representing a scene of a media production. Moreover, video and audio part of the audiovisual data 102 are extracted, whereas the audio part in particular is analysed for speaker detection. Audiovisual data 102 may be delivered to the data processing system 100 in many possible digital formats. Any type of digital format for audiovisual data is allowed and interpreted for further processing using a transcoder and generating an appropriate intermediate format.

As shown in Figure 1, having had the incoming data 101, 102 analysed and interpreted by the software modules script processing 103 and media processing 104, all formal descriptions 101 and audiovisual data 102 are directed to a server system 105, called a production database, wherein the respective data 101, 102 are stored.

Besides the direct link with the software modules script processing 103 and media processing 104 respectively, the server system 105 is also connected with the software module dialogue pattern matching 106 as illustrated in Figure 1. By means of the software module dialogue pattern matching 106, automated identification of audiovisual data 102 on one hand, and mapping of formal descriptions 101 with corresponding audiovisual data 102 on the other hand, both by making use of a dialogue pattern generated from audiovisual data 102, takes place. Having performed the automated identification and mapping of data, the software module dialogue pattern matching 106 will in return deliver additional information regarding this automated identification and mapping of data back to the server system 105, such that it can be stored in the production database to be accessible for further use or processing of audiovisual data 102 now identified.

Figure 1 finally represents three options for processing of audiovisual data 102, having been identified and mapped with formal descriptions 101, and illustrated by the software modules search and selection 107, video editing 108 and archiving 109 respectively. Each of these three software modules 107, 108, 109, determines each an individual application via which audiovisual data 102, including corresponding formal descriptions 101, are further used in a production environment. Through the software module search and selection 107 an application is run for searching and selecting audiovisual data being present in and captured from the server system 105. Furthermore, the software module video editing 108 representing the application of video editing audiovisual data 102, assists per specific media production in visualizing audiovisual data 102 for amending audiovisual sequences of fragments towards new versions of sequences containing corrections, e.g. related to the consecution of fragments, or further requirements, such as additional sound or music. By means of the software module archiving 109, audiovisual data 102 related to a particular scene of a media production can be annotated using markings and quotations directly in the formal description 101, such as a script, while simultaneously visualizing corresponding audiovisual data 102, including character appearance and dialogue pattern. The annotations hereby made, are especially intended for incorporation in transcripts or other document generation for archiving purposes.

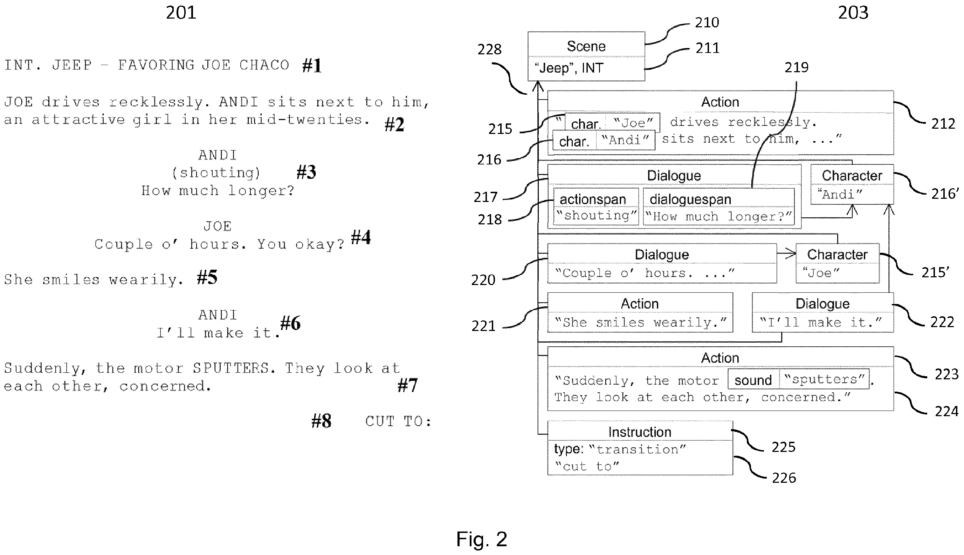

The individual software modules 103, 104, 106, 107, 108, 109 as well as the server system 105, for an embodiment of the data processing system 100 as described above, and illustrated in Figure 1, are further discussed below, while also referring to Figures 2-6.

### Script processing

Referring again to Figure 1, different types of formal descriptions 101, such as a script, a transcript, subtitles or any descriptive information originating from an archive system, are gathered for script processing 103. For describing further detail of the script processing process, Figure 2 is now considered, illustrating a script 201 and corresponding block diagram as output generated by the software module script processing 203. As shown in Figure 2, the script 201 is represented as text with a specific layout, comprising separate text blocks and consecutive numbers labelling these separate text blocks. The first text block of the script 201, labelled as #1, is written in capitals and left aligned, and therefore defined as the title of a scene for which the script 201 is given, common for media productions. Next, again left aligned another text block labelled #2 with names in capitals is represented. The names in capitals typically refer to characters of the scene, whereas the text block itself, typically left aligned, is determined as an action. Subsequent text block labelled #3 is centred and begins with a name in capitals. It is generally known that centred parts of a script 201 refer to dialogue parts, which standardly begins with the name of a character in capitals, sometimes between brackets followed by the way the dialogue part is to be expressed, and subsequently represents the words or lines the character mentioned in capitals has to bring. Hence, another dialogue part is given by text block labelled #4, as well as by text block labelled #6 respectively. Text block labelled #5, without mentioning any names, however referring to one of the characters, is clearly identifiable as another action. A final action is given by text block labelled #7, including also a sound effect by representing the verb to be related with a particular sound, in capitals. At the bottom of the script 201 in Figure 2, a text block labelled #8 is right aligned, indicating an instruction for production or post-production applications. As illustrated here, the instruction can be given for transition purposes, while 'CUT TO' indicates the script 201 is continued somewhere.

Further depicted in Figure 2, is the script processing 203 output for a given script 201, schematically representing the script 201 by means of a block diagram, initiated with a scene block 210 for a scene with a particular title 211, and further characterized by a set of action, dialogue, character and instruction blocks, corresponding respectively to actions, dialogues, characters and instructions in the script 201. In other words, the information contained by the first text block labelled #1 of the script 201 is now transferred into the scene block 210 of the block diagram. Below the scene block 210, all further blocks in the block diagram refer to the scene, as indicated by an arrow 228. Corresponding to the layout of the script 201, next block of the block diagram, just below the scene block 210, is an action block 212, whereas text block labelled #2 in the script 201 represents an action. The action #2 names two characters, to whom the action is related, and hence the action block 212 in the block diagram contains two character blocks 215, 216 referring to the respective character for whom the action in the action block 212 is intended. Further following the block diagram in relation to the script 201, a connecting line leading to a character block 216' and further a dialogue block 217 referring to this character block 216' appear next in the block diagram, corresponding to the dialogue part #3 of the script 201. As a dialogue part in a script 201 typically starts with the name of a character, the flow of the block diagram first directs towards the character block 216' indicating which character is bringing the dialogue. The dialogue block 217 comprises an action span 218 and a dialogue span 219. The action span 218 is representing the information of the dialogue part #3 between brackets in the script 201, i.e. contains the information regarding the way the dialogue has to be expressed, whereas the dialogue span 219 represents the words or the dialogue itself that is brought by the character as given by the character block 216'. Another dialogue block 220 preceded by another connecting line leading to another character block 215' is further occurring in the block diagram, clearly corresponding to the dialogue part #4 of the script 201. In accordance with the script 201, referring to action #5, another action block 221 is then represented, and followed by another dialogue block 222 as to be compared with dialogue part #6 in the script 201. The final action #7 from the script 201 is translated into a final action block 223 consisting of a description of the action itself, including an additional block, further referred to as sound block 224, and indicating sound effects to be applied in relation to the verb characterized by a particular sound. An instruction block 225 indicates an instruction. As illustrated here in the block diagram of Figure 2, the instruction can be a transition type instruction 226, indicating that the block diagram doesn't end here but is continued somewhere else given by 'CUT TO' statement.

Finally referring to Figure 2, the script 201 is now through script processing 203 decomposed into logical parts, represented by multiple action, dialogue, character and instruction blocks, and determining actions and dialogues related to characters, including instructions, occurring in the script 201. There is a direct correlation between the time frame of the dialogues and the length of letters, words or sentences these dialogues represent. As part of the script processing's so-called segmentation phase, during which the script 201 is decomposed into logical parts, letters from the dialogues are therefore counted and used to estimate the time these dialogues will take.

Additional processing steps during script processing 203 are optionally provided for fine-tuning the analysis and interpretation of the formal description 101 received by the data processing system 100. For example a spelling correction process may be integrated, such that the calculation of the letters from the dialogues can take place with higher accuracy, and hence a more accurate estimation of the time frame for the dialogues can occur. Furthermore, a process called named entity recognition can be applied, meaning that specific spots, geographic locations, or the presence of figurants or particular persons are logged as being recognized in the script 201, or any other type of formal description 101.

### Media processing

During media processing 104, the audiovisual data 102 received by the data processing system 100, is typically decomposed into a sequence of fragments, often referred to in the art as segmentation of audiovisual data. While the audiovisual data contains video as well as audio data, the audiovisual data is first separated into audio and video part respectively. After having extracted video and audio part respectively from the audiovisual data 102, the video part of the audiovisual data 102, representing different scenes, is split into separate shots as being short video fragments of a scene, whereas in parallel the audio part of the audiovisual data 102 is split into dialogues, defined as a sequence of words and sentences, and spoken by one or more particular speakers. Whenever segmentation of the audiovisual data has occurred, further processing of the segmented audiovisual data within the data processing system 100 can take place. Furthermore, any type of audiovisual data 102 format is captured by the data processing system 100. By means of a transcoder, an intermediate digital format is delivered for any type of audiovisual data received, enabling further processing or transfer to another system, e.g. editing software system, afterwards. Transcoding techniques as referred to, are known from the art. Media processing 104 further includes speaker detection, during which the audio part of the audiovisual data 102, split into dialogues related to particular speakers, is further analysed using voice recognition and/or machine transcription means, as known from the art, in order to detect the speakers within that audio part. The result of the machine transcription, i.e. a textual format, can be reduced to its semantic essence by natural language processing, as known from the art.

### Production database

The production database, operating as a server system 105 within the data processing system 100 is assigned to store all video fragments, and hence all dialogues, linked to a specific time-code and speakers' identification, in a precise organized way.

### Dialogue pattern matching

The dialogue pattern matching software module 106 is applied onto the audiovisual data 102 and formal descriptions 101 stored in the production database. In a first aspect, by means of this software module, the dialogue pattern is generated or extracted from the audiovisual data 102, more specifically from the audio part of the audiovisual data 102. The audiovisual data 102 is typically a sequence of video fragments, representing moving images together with the corresponding audio part. The sequence of video fragments as recorded is built based upon a specific script 201 or scenario, in which multiple players can occur. A player speaking is determined as a speaker within the audio part, representing only the spoken words and sounds of the audiovisual data 102. By recognition of every alternate speaker occurring in the audio part, for instance by using machine transcription of each audio part and by reducing each audio part to its semantic key concepts, a unique dialogue pattern is determined and generated. The recognition of alternate speakers takes place using frequency analysis and voice recognition means, as known from the art, integrated in the software module. The audiovisual data 102, being a sequence of video fragments, i.e. a movie or documentary scene, is hence uniquely identified based upon the dialogue pattern generated. The software module dialogue pattern matching further provides script pattern calculation. Knowing that the dialogues from speakers within the audio part of the audiovisual data 102 have certain duration, and due to the correlation between the dialogue duration in terms of time or minutes and the dialogue length in terms of number of spoken words or letters to be counted, an estimation of the dialogue length is calculated. In other words, a parameter for the timing of the dialogues within the audio of the audiovisual data 102 can be translated into a parameter for the amount of letters that these dialogues represent. Audiovisual data 102 is therefore transferable into a certain amount of letters or text, representing the script 201 or scenario as given by the audiovisual data 102 recorded, and to be determined as a script pattern calculated from the audiovisual data 102. Whereas the audiovisual data 102 is identified by a dialogue pattern, and a script pattern is generated from the audiovisual data 102 using the duration of the dialogues, the script pattern also represents the dialogue pattern. The script pattern extracted from the audiovisual data 102, both identified by the dialogue pattern, can subsequently be compared with the original script 201 or scenario characterized by words or letters, including the dialogues as originally been created, represented in a specific structured way. The dialogue pattern represented by the script pattern is compared with the format the original script 201, significantly characterized by the original dialogues. Hence the audiovisual data 102 identified by the dialogue pattern, is easily matched with the corresponding original script 201 or scenario, by using the dialogue pattern represented by the script pattern as extracted from the audiovisual data 102.

### Search and selection

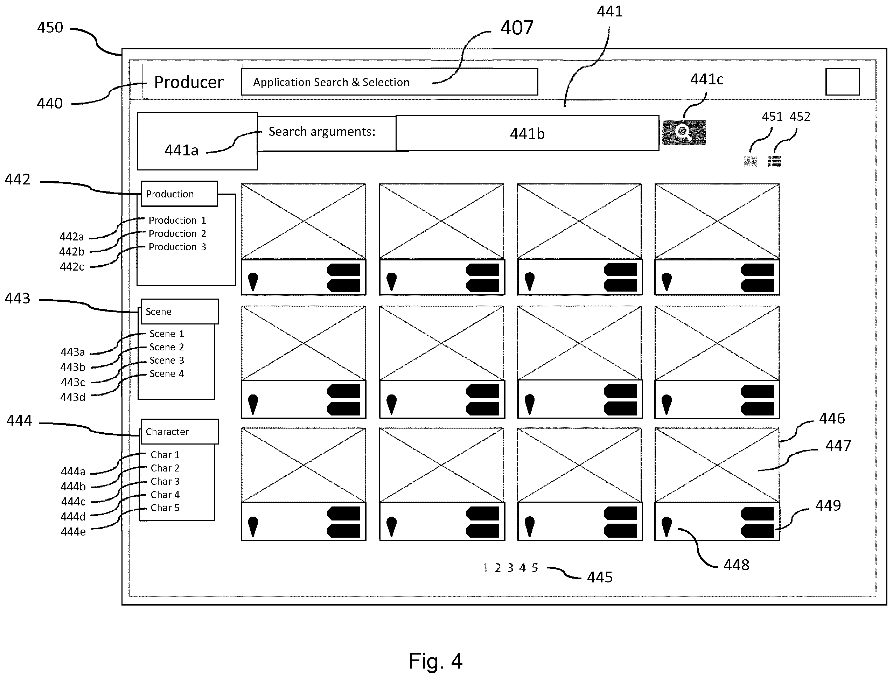

The software module search and selection 107 particularly represents a search and selection application to be performed in the environment where the audiovisual data 102 is identified using a dialogue pattern. There is a direct link between the software module search and selection 107 on one hand, and the production database operating as a server system 105 wherein the audiovisual data 102 identified is stored, on the other hand. Due to the audiovisual data 102 having been identified, searching and selecting this audiovisual data 102 is facilitated. With Figure 4, the user interface of the search and selection application 407 on a computer screen 450 is depicted. As shown in Figure 4, the user interface is uniquely linked to a producer 440, earlier defined as the overall responsible person for a media production in particular, who is mentioned by name in the top left corner of the computer screen 450. In order to search and select amongst identified audiovisual data 102, a search box 441 is given via the user interface. This search box 441 allows the user, i.e. the producer, to enter specific keywords to which the audiovisual data 102 that is searched for can be related. The search box 441 represents three parts 441 a, 441 b, 441 c of which a first part 441 a defines the search box 441, a second part 441 b is intended to enter relevant keywords for the search, and a third part 441 c containing the icon of a magnifying glass is meant to execute the search. Based upon entering certain keywords in the second part 441 b of the search box 441 and executing the search by clicking the third part 441 c depicting the icon of a magnifying glass, a number of video images interpreted by the software module as being relevant in relation to the keywords given, will result from the search. These video images are captured from the production database where all identified audiovisual material is stored. The resulting video images are offered via the application 407 by separate thumbnails 446 respectively, representing each first image 447 of the video image concerned, as well as the location 448 where the video image was recorded and a number of tags 449 to be related with the content of the video image in particular. The thumbnails 446, are depicted on the computer screen 450 in a structured matrix layout, or via an ordered list representation, as can be chosen by clicking the respective button 451, 452 for either of these views. Possibly the thumbnails 446 are too numerous, due to the large amount of video images resulting from the search, such that they need to be offered via multiple pages 445 instead of depicting all of them on just one page. Different pages containing different thumbnails 446 for resulting video images can be selected by clicking the page 445 appointed with the cursor on the computer screen 450. Whereas the audiovisual data 102 is identified using a dialogue pattern, the uniquely identified audiovisual data 102 is stored together with unique production data and unique scene information. In other words, productions and scenes, as being uniquely related to particular and uniquely identified audiovisual data 102, are easily retrieved amongst the uniquely identified audiovisual data 102 present in the production database. Therefore, the search and selection application 407 is not only executable by entering keywords via the search box 441, but delivers further immediate search and selection options with respect to productions 442 and scenes 443 respectively as illustrated in Figure 4. A particular production 442a, 442b, 442c or a particular scene 443a, 443b, 443c, 443d can be chosen in order to continue with the search and selection application 407. Moreover, other search and selection criteria can be added, such as characters 444, i.e. the actors or players within a media production, appearing within the audiovisual data 102, also shown in Figure 4 and specified by 444a - 444e, or geographic locations or particular subjects (not illustrated).

### Video editing

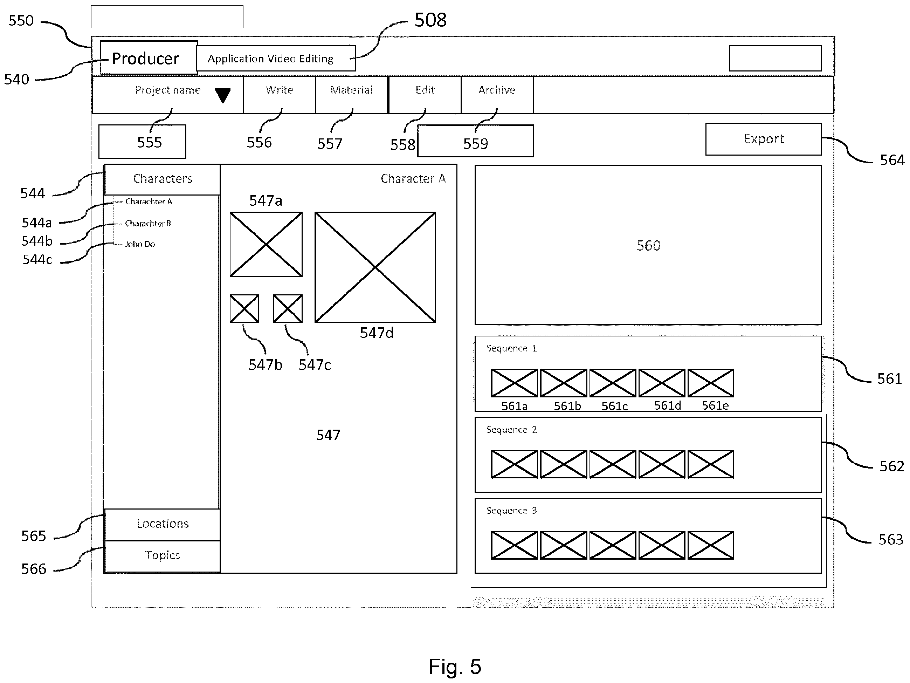

The software module video editing 108 stands for further editing the audiovisual data 102 identified and stored in the production database. Further editing particularly includes, but is not limited to audio and/or video editing of the audiovisual data 102. There is a direct link between the software module video editing 108 on one hand, and the production database operating as a server system 105 wherein the audiovisual data 102 identified is stored, on the other hand. Due to the audiovisual data 102 having been identified, video editing of this audiovisual data 102 is facilitated. With Figure 5, the user interface of the video editing application 508 on a computer screen 550 is depicted. As shown in Figure 5, the user interface is uniquely linked to a producer 540, earlier defined as the overall responsible person for a media production in particular, who is mentioned by name in the top left corner of the computer screen 550. The video editing application 508, as shown in Figure 5, considers a particular media production as a starting point by selecting the respective project name 555 of this particular media production. Next to the tab where the project name 555 can be selected, four more tabs 556, 557, 558, 559 are illustrated. With the video editing application 508 active, the edit tab 558 is selected and highlighted, whereas the three other tabs 556, 557, 559, called write tab 556, material tab 557 and archive tab 559 respectively, are shown to be selected from the background. The situation with the video editing application 508 active, hence edit tab 558 highlighted is now discussed. Since a media production is selected by project name 555, a list of appearing characters 544 in this media production is automatically generated as illustrated in Figure 5. Each of the appearing characters 544a, 544b, 544c is named one after the other, and can be clicked on individually. Clicking on a particular character 544c, thereby selecting this character will enable visualizing the scenes related to this character by depicting thumbnails 547 illustrating first image of these scenes. The size of a thumbnail 547, representing a specific scene, is an indication for the relevance of the character 544c appearing in this scene. In other words, the selected character 544c in Figure 5 is strongly related to the scene represented by thumbnail 547d, whereas the scenes represented by thumbnails 547b and 547c show much lower relevance with the character chosen 544c. Medium relevance with the selected character 544c is indicated for the scene represented by thumbnail 547a. Each of the given scenes represented by a particular thumbnail 547 can be selected, in order to view the chosen scene via a play window 560 onto the computer screen 550. The play window 560 is preferably provided with a play tab through which playing instructions can be directed. A given scene is built as a sequence 561, 562, 563 of fragments, as further shown in Figure 5. Considering now the scene with sequence 1 561, the fragments 561 a, 561 b, 561 c, 561 d, 561 e are automatically generated in a certain order by the video editing application 508. However, only a few fragments may be selected from that scene to continue with, or even fragments may be switched from position amongst each other. Having selected one or more particular scenes, with or without amendments included using the video editing application 508, these scenes can be exported to e.g. the final editor, by means of the export button 564.

Besides the direct link of a particular media production selected by project name 555 with the list of appearing characters, locations 565 or appearing or relevant topics 566 or even other defined characteristics (not shown) can also be viewed and suggested to further select scenes for editing purposes.

Whenever the write tab 556 is selected, it is visualized onto the computer screen 550 how the script 201 is shown after interpretation due to script processing 103, 203. In order to receive an overview of all video clips for a particular media production, and enabling the user of adding a description to each of these individual video clips, the material tab 557 should be selected. Finally, the archive tab 559 will highlight in case the archiving application 609 is active, and is discussed into detail in the following paragraph.

### Archiving

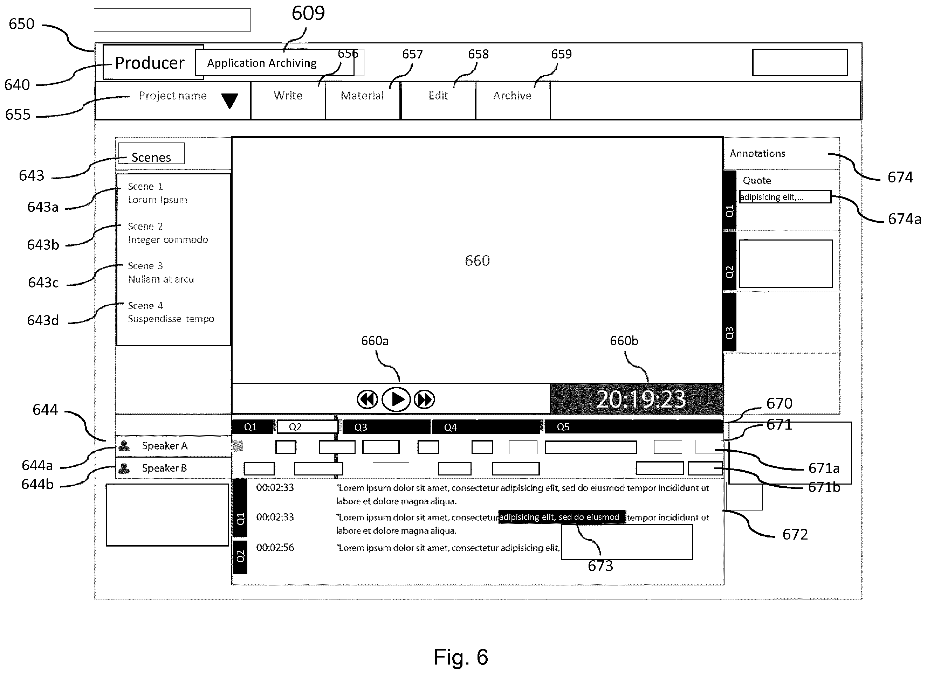

Considering now the software module archiving 109 as a possible application with respect to further processing of the audiovisual data 102 identified and stored in the production database. There is a direct link between the software module archiving 109 on one hand, and the production database operating as a server system 105 wherein the audiovisual data 102 identified is stored, on the other hand. Due to the audiovisual data 102 having been identified, archiving of this audiovisual data 102 is facilitated. With Figure 6, the user interface of the archiving application 609 on a computer screen 650 is depicted. As shown in Figure 6, the user interface is uniquely linked to a producer 640, earlier defined as the overall responsible person for a media production in particular, who is mentioned by name in the top left corner of the computer screen 650. In terms of archiving or media asset management, a semi-automated transcript can be generated using the identified audiovisual data 102 as well as corresponding formal description 101, e.g. here a script 201. Whenever matching, mapping or synchronizing the audiovisual data 102 with corresponding script 201 as a result of script and media processing 103, 104 on one hand, and dialogue pattern matching 106 on the other hand, an automated transcript can be generated based upon the original script 201, and subsequently brought in accurate version, particularly regarding the exact content, using corresponding audiovisual data 102. The archiving application 609, as shown in Figure 6, considers a particular media production as a starting point by selecting the respective project name 655 of this particular media production. Next to the tab where the project name 655 can be selected, four more tabs 656, 657, 658, 659 are illustrated. With the archiving application 609 active, the archive tab 659 is selected and highlighted, whereas the three other tabs 656, 657, 658, called write tab 656, material tab 657 and edit tab 658 respectively, are shown to be selected from the background. The situation with archiving application 609 active, hence archive tab 659 highlighted is now further discussed. For a media production having been selected by project name 655, a list of appearing scenes 643 in this media production is automatically generated as illustrated left in Figure 6. Each of the appearing scenes 643a, 643b, 643c, 643d is named one after the other, and can be clicked on individually. Clicking on a particular scene 643a, thereby selecting this scene will enable viewing this particular scene 643a by means of a play window 660 onto the computer screen 650. The play window 660 is provided with a play tab 660a through which playing instructions can be directed, as well as a time indicator 660b, indicating the timing and duration of a chosen scene 643a. For each scene that can be chosen, one or more characters can appear. In case of speaking characters, these speaking characters or speakers 644 within in a chosen scene 643a represent a particular dialogue pattern 671 as shown in Figure 6. The chosen scene 643a is also related to a specific timing-table 670, which in turn can be correlated with the dialogue pattern 671. The timing-table 670 is here depicted as subsequent quarters (Q1-Q8) of a minute, representing together the complete duration of (part of) a scene, in which the characters are playing and speaking words. For each speaker 644a, 644b there is a particular dialogue 671 a, 671 b or set of words to be brought, whereas the combination of these dialogues 671a, 671 b uniquely represent the dialogue pattern 671 of (part of) the scene. When using the archiving application 609, it is not only possible to visualize the speakers' dialogues 671 a, 671 b, dialogue pattern 671, and timing-table 670 for a chosen scene 643a, moreover, the automatically generated transcript 672 of the chosen scene 643a can be viewed and annotated. The annotation 673 as shown in Figure 6, consists of marking certain part of the text, determined as a quote. Furthermore, to keep the overview in the archiving application 609, all annotations 674 are listed right on the computer screen 650. As illustrated by Figure 6, the content of the first annotation 674a in the list 674 depicted right on the screen 650 corresponds with the content of the marked text or quote annotation 673 depicted below on the screen 650.

Whenever the write tab 656 is selected, it is visualized onto the computer screen 650 how the script 201 is shown after interpretation due to script processing 103, 203. In order to receive an overview of all video clips for a particular media production, and enabling the user of adding a description to each of these individual video clips, the material tab 657 should be selected. Finally, the edit tab 658 will highlight in case the video editing application 508 is active, as discussed into detail in paragraphs above.

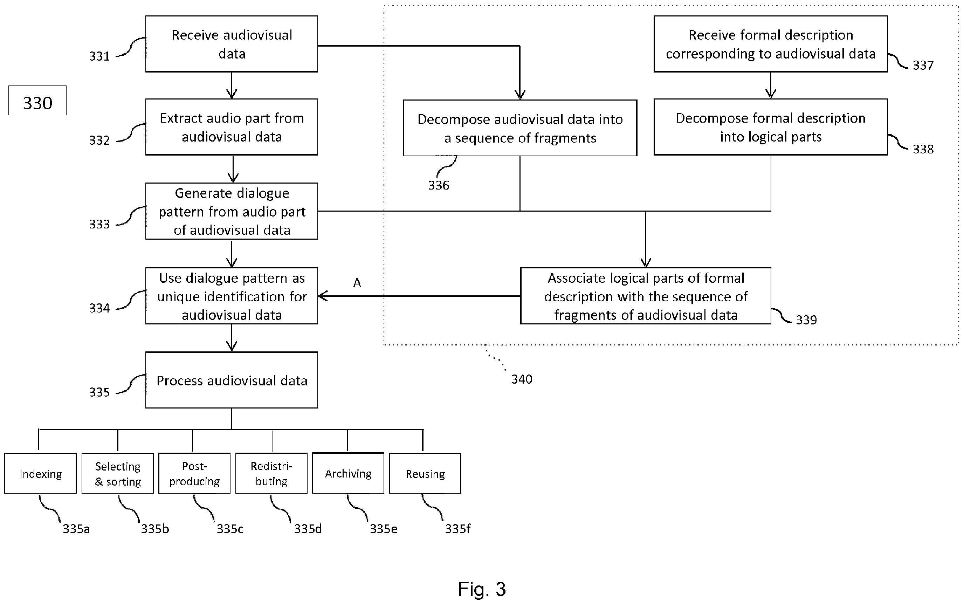

Figure 3 illustrates the method 330 for automated identification and processing of audiovisual data 102. At first, in step 331, audiovisual data 102 is received from a source, e.g. a camera or other recording means, or a computer on which the audiovisual data 102 has been stored. Subsequently, i.e. in step 332, the audio part from the audiovisual data 102 received is extracted. Based upon this audio part, a dialogue pattern is generated in step 333. In step 334, this dialogue pattern as generated, can then be used as a unique identification for the audiovisual data 102. As indicated by step 335, the audiovisual data 102 now uniquely identified based on the dialogue pattern generated, is processed. Processing the identified audiovisual data 102 includes indexing 335a, selecting and sorting 335b, post-producing 335c, redistributing 335d and/or archiving 335e the audiovisual data 102, as well as reusing 335f the audiovisual data 102 in another format or composition.

As further illustrated by Figure 3, the method 330 for automated identification and processing of audiovisual data 102 also provides mapping 340 of the audiovisual data 102 with corresponding formal description 101, whenever this corresponding formal description 101 is received, indicated by step 337. In step 336, the audiovisual data 102 received is decomposed into a sequence fragments, while in step 338 corresponding formal description 101 received, is decomposed into logical parts. Mapping 340 of the audiovisual data 102 with corresponding formal description 101 is accomplished in step 339 by associating logical parts of the formal description 101 with the sequence of fragments of audiovisual data 102, using the dialogue pattern as generated in step 333. As illustrated by the arrow A, the result of this association, or mapping 340, can then be returned to further use the dialogue pattern, as a unique identification of the audiovisual data 102.

It is noticed that the method 330 according to the present invention or certain steps thereof shall typically be computer-implemented to run on a data processing system 100 or computing device. A data processing system 100 or computing device that is operated according to the present invention can include a workstation, a server, a laptop, a desktop, a hand-held device, a mobile device, a tablet computer, or other computing device, as would be understood by those of skill in the art.

The data processing system 100 or computing device can include a bus or network for connectivity between several components, directly or indirectly, a memory or database, one or more processors, input/output ports, a power supply, etc. One of skill in the art will appreciate that the bus or network can include one or more busses, such as an address bus, a data bus, or any combination thereof, or can include one or more network links. One of skill in the art additionally will appreciate that, depending on the intended applications and uses of a particular embodiment, multiple of these components can be implemented by a single device. Similarly, in some instances, a single component can be implemented by multiple devices.

The data processing system 100 or computing device can include or interact with a variety of computer-readable media. For example, computer-readable media can include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices that can be used to encode information and can be accessed by the data processing system 100 or computing device.

The memory can include computer-storage media in the form of volatile and/or nonvolatile memory. The memory may be removable, non-removable, or any combination thereof. Exemplary hardware devices are devices such as hard drives, solid-state memory, optical-disc drives, or the like. The data processing system 100 or computing device can include one or more processors that read data from components such as the memory, the various I/O components, etc.

The I/O ports can allow the data processing system 100 or computing device to be logically coupled to other devices, such as I/O components. Some of the I/O components can be built into the computing device. Examples of such I/O components include a microphone, joystick, recording device, game pad, satellite dish, scanner, printer, wireless device, networking device, or the like.

## Claims

1. A method (330) for automated identification and processing of audiovisual data (102), said method (330) comprising the steps of:
receiving audiovisual data (102) from a source;
extracting an audio part of said audiovisual data (102);
generating from said audio part of said audiovisual data (102) a dialogue pattern, wherein said dialogue pattern is determined by recognition of an alternate speaker within said audio part and the duration that said alternate speaker is speaking within said audio part without interruption by another alternate speaker;
using said dialogue pattern as a unique identification for said audiovisual data (102); and
processing of said audiovisual data (102) based upon the unique identification.

2. The method (330) for automated identification and processing of audiovisual data (102) according to claim 1, wherein said generating of said dialogue pattern further comprises the steps of:
generating a sequence of dialogue fragments, wherein said sequence of dialogue fragments is determined by recognition of alternate speakers within said audio part;
using machine transcription to transform said sequence of dialogue fragments into a text;
using natural language processing to reduce said text to key semantic concepts; and
assembling said key semantic concepts to said dialogue pattern.

3. The method (330) for automated identification and processing of audiovisual data (102) according to any of claims 1 or 2, said method (330) further comprising the steps of:
receiving a formal description (101) corresponding to said audiovisual data (102); and
mapping (340) said formal description (101) with said audiovisual data (102) using said dialogue pattern.

4. The method (330) for automated identification and processing of audiovisual data (102) according to claim 3, said mapping (340) comprising the steps of:
decomposing said formal description (101) into logical parts; and
decomposing said audiovisual data (102) into a sequence of fragments; and
associating said logical parts of said formal description (101) with said sequence of fragments of said audiovisual data (102) using said dialogue pattern.

5. The method (330) for automated identification and processing of audiovisual data (102) according to any of claims 1 to 4, said processing comprising:
indexing (335a) said audiovisual data (102).

6. The method (330) for automated identification and processing of audiovisual data (102) according to any of claims 1 to 5, said processing comprising the steps of:
gathering a multiple amount of identified audiovisual data (102) that are identified similar to said audiovisual data (102); and
selecting and sorting (335b) amongst said multiple amount of identified audiovisual data (102).

7. The method (330) for automated identification and processing of audiovisual data (102) according to any of claims 1 to 6, said processing comprising:
post-producing (335c) said audiovisual data (102), comprising audio and/or video editing of said audiovisual data (102).

8. The method (330) for automated identification and processing of audiovisual data (102) according to any of claims 1 to 7, said processing comprising:
redistributing (335d) said audiovisual data (102).

9. The method (330) for automated identification and processing of audiovisual data (102) according to any of claims 1 to 8, said processing comprising:
archiving (335e) said audiovisual data (102).

10. The method (330) for automated identification and processing of audiovisual data (102) according to any of claims 1 to 9, said processing comprising:
reusing (335f) said audiovisual data (102) as raw material for generating different audiovisual data (102).

11. The method (330) for automated identification and processing of audiovisual data (102) according to any of claims 1 to 10, wherein said recognition of an alternate speaker is based upon voice recognition, and/or frequency analysis.

12. A data processing system 100 comprising means for carrying out the method (330) of any of claims 1 to 11.

13. A computer program comprising software code adapted to perform the method (330) of any of claims 1 to 11.

14. A computer readable storage medium comprising the computer program of claim 13.
